# EUROPEAN PATENT SPECIFICATION

(11) **EP 1 247 368 B1**
(45) Date of publication and mention of the grant of the patent: **31.05.2006**
(21) Application number: 01904778.6
(22) Date of filing: 03.01.2001
(51) Int. Cl.: H04J 3/06, H04B 7/26, H04Q 7/38

(54) **COMMUNICATION APPARATUS**
KOMMUNIKATIONSVORRICHTUNG
APPAREIL DE COMMUNICATION

(30) Priority: 14.01.2000 SG 200000279
(43) Date of publication of application: 09.10.2002
(73) Proprietor: Addvalue Technologies Ltd., Singapore 469004 (SG)
(72) Inventor: TAN, Khai, Pang, Singapore 466639 (SG); KALAIVANAN, K., Singapore 550242 (SG)
(74) Representative: Findlay, Alice Rosemary
(86) International application number: PCT/SG2001/000004
(87) International publication number: WO 2001/052461

(56) References cited:
- WO-A1-99/16275
- GB-A- 2 277 232

## Description

### Background and Field of the Invention

This invention relates to communication apparatus, more particularly for peer-to-peer communication in a wireless (e.g. radio frequency) network.

Wireless communication systems such as mobile phones or walkie-talkies can provide communication between two parties. However, when multi-party communication is desired, particularly when more than one party might be talking at the same time, considerable co-ordination and synchronization of signals, usually through a central or designated master/controller is required, which leads to complexity and inflexibility in operation.

GB 2277232 discloses a TDMA communication system comprising a base station and a number of mobile radios arranged for communication over a TDMA channel having a predetermined frame reference. This prior art describes handshaking between the base station and the mobile radios and the base station is used to control communication between the mobile devices, which also leads to inflexibility in operation.

It is the object of the invention to provide communication apparatus which alleviates at least one of the above problems.

### Summary of the Invention

According to the invention in a first aspect, there is provided a communication apparatus comprising a plurality of mobile communication devices (1,2) arranged for peer-to-peer communication using TDMA, the arrangement being such that a said device (1,2) wishing to transmit uses a time slot in each TDMA time-frame used for transmission, the time slot in each TDMA time-frame being the same, the communication devices (1,2) including means for synchronization (100,110,130) to the same TDMA time frame using a synchronization signal characterised in that the synchronization signal is being transmitted by a said communication device (1,2).

If more than one device wishes to transmit, the devices use different said time slots.

According to the invention in a second aspect, there is provided a mobile communication device (1,2) comprising a transmitter (100), a TDMA burst mode controller (110) and signal processing means (120), the arrangement being such that an input signal to be transmitted by the communication device (1,2) is digitally processed by the signal processing means (120) and the burst mode controller (110) encodes the processed signal for transmission by the transmitter (100) in a TDMA time slot in each TDMA time frame used for transmission, the time slot in each frame being the same, and means for synchronization (100,110,130) of the communication device to the same TDMA time frame as other mobile communication devices (1,2) in the same net,
characterised in that the synchronization signal is being transmitted by a said communication device (1,2).

According to the invention in a third aspect, there is provided a mobile communication device (1,2) comprising a receiver (100), a TDMA burst mode controller (110) and signal processing means (120), the arrangement being such that the burst mode controller (110) decodes TDMA signals received by the receiver (100) in a time slot in each TDMA time frame used for transmission of the received signal, the time slot in each TDMA time-frame being the same, the signal processing means (120) processing the decoded signals to provide an output and means for synchronization (100,110,130) to the same TDMA time frame used for transmission of the received signal using a synchronization signal, characterised in that the synchronization signal is being transmitted by a said communication device (1,2).

In the described embodiment of the invention, a plurality of mobile communication devices (1,2) are provided. Communication between the devices (1,2) is essentially peer-to-peer using time division multiple access (TDMA) transmission and reception. All devices (1,2) are synchronized to each other using a common time base to perform the synchronization. In one preferred embodiment the synchronization is performed by using the time signal from a global position satellite (GPS) system. In other embodiments this is achieved using either a beacon or using the first RF transmission as a synchronizing base for the other devices (1,2). All transmitting devices (1,2) reserve a different time slot in each TDM time-frame so that all transmitting devices transmit, effectively, in different channels. Thus, full multi-party communication can be achieved.

### Brief Description of the Drawings

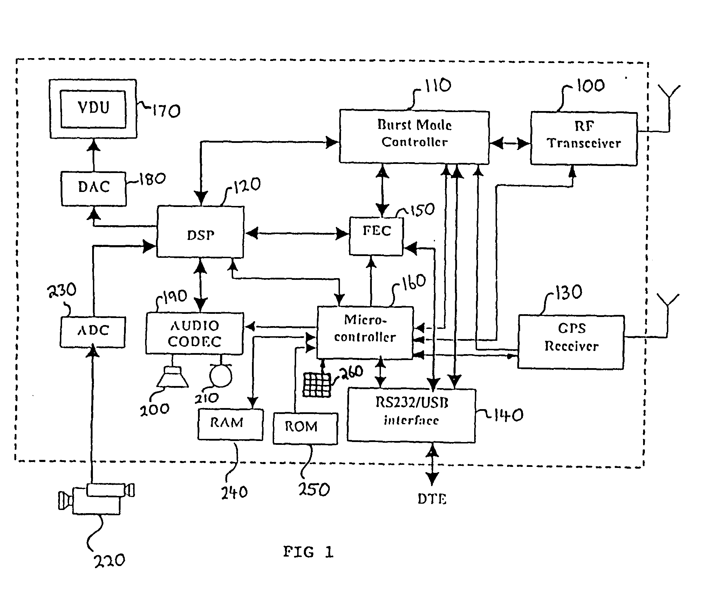

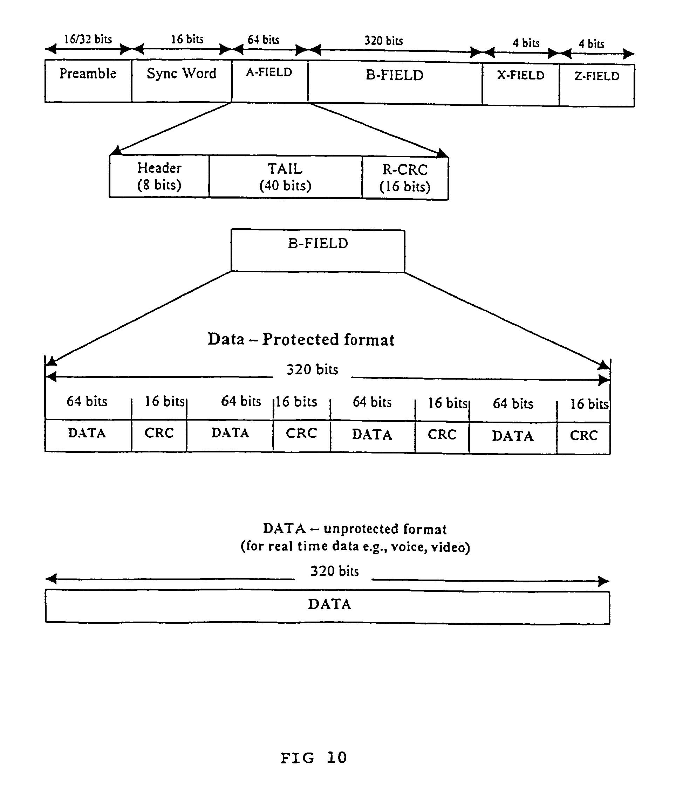

An embodiment of the invention will now be described, by way of example, with reference to the accompanying drawings in which:
Figure 1 is block diagram of an embodiment of a communication device of the invention.
Figures 2 - 9 illustrates point to multi point audio communication using the embodiment of the invention with Figure 2 showing one party audio broadcast with unlimited listeners, Figure 3 showing two party audio conference with unlimited listeners and Figure 4 showing three party audio conference with unlimited listeners;
Figures 5 and 6 illustrate data communication using the embodiment of the invention with Figure 5 showing one party data broadcast with unlimited recipients and Figure 6 showing multiple connection oriented point-to-point data communication; and
Figures 7 and 8 and 9 illustrate video broadcast using the embodiment of the invention, Figure 7 illustrating video broadcast with unlimited listeners and Figure 8 illustrating multi-media broadcast with unlimited listeners and Figure 9 illustrating a two-party multi-media broadcast with unlimited listeners.
Figure 10 illustrates the data structure of a data packet; and
Figure 11 illustrates GPS time-base synchronization of communication devices.
Figures 12a, b and c are flowcharts illustrating a preferred synchronization technique of the invention.
The communication apparatus of the embodiment of the invention consists of a plurality of essentially identical communication devices of which one is illustrated in Fig. 1. The device includes a RF transceiver 100 which, in upstream mode, modulates raw data to be transmitted using any suitable digital modulation techniques (e.g. GMSK) and then converts this for radio frequency transmission through the air. In downstream mode, the transceiver 100 converts RF signal into base band signals, demodulating the base band signals to recover the received raw data.
The transceiver 100 is connected to a burst mode controller (BMC) 110 which, in the upstream direction, collects continuous outbound data and buffers this for a period equivalent to a TDM time-frame and then sends the buffered data in packet as a burst at a designated time slot in the TDM time-frame at a higher data rate. An example of data packet structure is shown in Fig. 10 and includes the following elements, for which the bit length of each component is given in Fig. 10:

### Preamble & Sync Word:

A preamble and sync word are signals used in network communications to synchronize the transmission timing between two or more systems. Proper timing ensures that all systems are interpreting the start of the information transfer correctly.

A preamble defines a specific series of transmission pulses that is understood by communicating systems to mean "someone is about to transmit data". This ensures that systems receiving the information correctly interpret when the data transmission starts. The actual pulses used as a preamble vary depending on the network communication technology in use.

Sync word is a unique pattern which are transmitted during every transmission slot, after preamble, and is used for correlation purposes to get the bit level synchronized every frame, and also to make timing corrections.

### A-Field:

A-field is used to carry control, signalling and all other types of information required for wireless communication (e.g. handshaking information in the case of connection oriented data transfer, to exchange information such as link setup, link release, etc.; and information necessary for synchronization, identity number of the transmitting party, addressee information, call type and priority level, etc.).

The A-field has three component parts, a Header, a Tail and R-CRC. The Header indicates what type of information is carried by the Tail bits of the A-field. The Tail (or footer) carried the A-field data. R-CRC is a Cyclic Redundancy Check field for detecting errors in the A-field data. At the transmitting end, the CRC is computed for the A-field and inserted. At the receiving end, CRC is verified and the possible errors are detected and retransmission is requested when an error is found.

### B-Field:

This field carries the user information (e.g. audio data, video data, file transfer data, etc). This can be in unprotected or protected form.

### Unprotected B-field data:

Real-time data like audio, video data which can tolerate up to certain level of errors is used in unprotected mode. This means, the whole bandwidth of the B-field is filled with the information data bits. This increases throughput.

### Protected B-field data:

Protected B-field is used in the case of data transfer (e.g. a file transfer) which should be secure and error free. In these cases, the B-field is segmented and each segment carries a CRC (Cyclic Redundancy Check) for detecting errors. At the transmitting end, CRC is computed for every data segment and inserted. At the receiving end, CRC is verified and the possible errors are detected and retransmission is requested when an error is found.

### X-field and Z-field:

The X-field and Z-field are used to find errors in the B-field but at a superficial level. These two fields are identical, they carry a small CRC (e.g. 4 bits each) computed from selected bits in the B-field. This is mainly useful for error detection in unprotected mode information transfer.

In the downstream direction, the BMC 110 receives bursts of data at different time slots, removes the overhead (the non-informational portion of the data packet) and separates the information data from the signalling data.

The burst mode controller is connected to a digital signal processor 120, a GPS receiver 130, a RS232/USB interface 140, a forward error correction processor 150 and a micro-controller 160. The burst mode controller 110 sends the information data to the digital signal processor 120, forward error correction processor 150 (if error correction is used in the information transmission) and/or RS232/USB interface 140 (depending on the data type e.g. audio, video or file transfer data) and sends the signalling data to the micro-controller 160.

The digital signal processor 120 is connected to the forward error correction processor 150, to a visual display unit 170 via a digital to analog converter 180, to an audio CODEC 190 to which a speaker 200 and microphone 210 are connected, to a video camera 220 via an analog to digital converter 230 (the video camera 220 may be connected via a connection port to the device) and to the micro-controller 160. The digital signal processor essentially converts video and audio data for transmission/reception. In upstream mode, the digital signal processor 120 receives voice data from microphone 210, which is digitized by audio CODEC 190 or video data from video camera 220 which is digitized by analog to digital converter 230. The digital signal processor then compresses the data, for example audio data in the form of PCM audio samples is converted into ADPCM or video data is compressed using any known video compressing algorithm. The compressed data is sent to forward error correction processor 150 (if this is used) or to the burst mode controller directly if not. In the downstream direction, the reverse process (decompression) is carried out by the digital signal processor 120 where applicable. If there are multiple audio streams incoming, then after decompression, all the audio signals are mixed to produce a composite signal before sending this to the CODEC 190 for analog audio conversion and output through speaker 200.

The RS232/USB interface 140 is connected to the micro-controller 160, forward error correction processor 150 and data terminal equipment (DTE). RS232/USB interface 140 acts as an electrical interface providing a physical medium to transfer data between the DTE and the communication device. In case of data coming from the data terminal equipment, RS232/USB interface channels the data either directly to the burst mode controller 110 or indirectly via forward error correction processor 150 if error correction is required. The RS232/USB interface 140 is controlled by the micro-controller 160 (e.g. flow control, link setup with DTE, release of link etc.

The forward error correction processor 150 in the upstream direction receives outbound data from the digital signal processor 120 or interface 140, encodes this using any standard forward error correction algorithm, for example convolutional coding and/or Reed Solomon encoding before passing the encoded data to the burst mode controller 110. In the downstream direction, the forward error correction processor 150 receives data from the burst mode controller 110 and decodes the data using the reverse process to that described above, e.g. Reed Solomon decoding and/or Viterbi decoding, at the same time correcting those errors that are correctable. The FEC processor 150 then passes the data to DSP 120 or to the RS232/USB interface where applicable.

The global positioning system (GPS) receiver 130 receives GPS signals from GPS satellites and provide a timing reference signal (time-base) to the burst mode controller 110 which uses this time-base to align its TDMA time-frame to the GPS time-base boundary. This is to achieve synchronization of all communication devices within a radio net.

The visual display unit 170 is a LCD display, a plasma display or any other commercially available display unit (e.g. a video monitor).

The micro-controller 160 controls the operation of the other components of the device. The controller is connected to a Random Excess Memory 240 and a Read Only Memory 250 and a keypad 260 and executes the communication protocol layers and interacts with the user interface of the system. The controller 160 fetches soft code from the ROM 250 and executes by using the internal/external RAM 240 as the data memory. The controller 160 receives user commands from the keypad 260 (or voice-activated commands from DSP 120), and interfaces with the other components of the device to control them all.

Communication using the embodiment of the invention will now be described. The communication scheme of the invention uses time divisional multiple access (TDMA) in a multi-user environment to allow any user to seize a required bandwidth on demand (if available) in a communication channel and send that information as data packets with a designated address. The addressee could be a single party or multiple parties.

The communication group can be effectively of any size but all of the participants should be within the radio coverage area of others. The area confines a one group of users is termed hereinafter a radio-net.

A feature of the described embodiment of the invention is that any user transmitting over the net to other members of the group selects one or more time slots in each TDM time-frame and transmits in the same time slot(s) each frame. If other users wish to transmit, they select different unused time slots.

This technique requires all the members of the group to be synchronized to the same TDM time frame. There are several techniques which can be used to effect synchronization as follows:

### 1) Synchronization using the global positioning system (GPS).

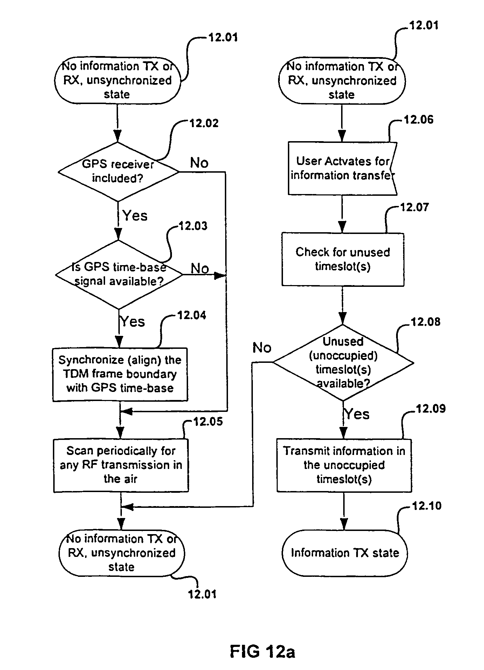

The signal transmitted by a GPS satellite includes a time signal and synchronization can be achieved by aligning the time-frame boundary with the GPS time-base. To achieve this, the TDM time-frame needs to be so chosen that the GPS time-base is an integral multiple of the TDM time frame duration. In the preferred embodiment, every communication device is provided with GPS receiver 130 and can synchronize independently to the GPS time-base so that the TDM time frame also become in synchronization. This is illustrated in Fig. 11 which shows two communication devices, labeled 1 and 2. The GPS receiver 130 in each device 1, 2 independently receive a time base signal 3 from a GPS satellite. Using this signal, the burst model controller 110 in each device 1, 2 align the TDM time frame of each device with reference to the GPS time base. This in turn brings the TDM time frame of communication devices 1, 2 aligned and hence these become indirectly synchronized with each other at the frame and slot boundary level.

### 2) Synchronization using a beacon transmission.

A second preferred way of synchronization is to use a beacon transmission. One of the connection devices in the radio-net transmits a beacon on a time slot once every TDM time-frame. This beacon is then received by other connection devices in the radio-net and allows them to synchronize with the sender. The connection device sending the beacon transmission need not be permanent but can be chosen in any way, for example by rotation amongst the members of the group.

Beacon transmission, which is only used for synchronization purposes does not carry user information and does not have B-field, X-field and Z-field in the packet example shown in Fig. 10.

### 3) Synchronization using a combination of GPS time-base and a beacon transmission.

Synchronization can be achieved by combining (1) and (2) above. In this case, all the units in the radio-net need not have GPS receivers to get the time-base reference as in (1) above and also allows the time frame to be synchronized to the GPS signal. This kind of synchronization has the advantage that it allows two independent radio-nets to be mutually synchronized to the GPS time base. This will allow inter-radio-net communication since both radio-nets are in synchronization with the GPS time base.

### 4) Synchronization based on the first information transmission channel.

Synchronization within the radio-net can be achieved by using the first RF transmission for information transfer. When there is no information exchanged (i.e. the radio net is quiet), there is no RF transmission and all the members of the net may not be in synchronization. When the first party starts to transmit information, this party will broadcast synchronization information on the information channel and takes that as the timing reference. Synchronization within the radio-net can be achieved by using the first RF transmission for information transfer. When there is no information exchanged, there is no RF transmission and all the members of the net may not be in synchronization. When the first party starts to transmit information, this party will broadcast both synchronization information (on the A-field of the time slot of the packet of Fig. 10) and the user information e.g. audio (on the B-field of the time-slot of the packet of Fig. 10). All communication devices of the net which, periodically scan for any RF transmission, would find this first information transmission, get synchronized with the first information transmission using the synchronization information (carried by the A-field) and then start to receive the user information (e.g. audio). Even if the user information is not addressed to any of the members in the radio-net, the members can still get synchronized with the information transmission channel (using A-field information) without receiving the user information e.g. audio (in the B-field).

For connection oriented information transmission between two parties (e.g. file transfer) which requires handshaking between the two parties, the first party would transmit only the synchronization information and other relevant information in the A-field for a period of time (e.g. about 10 seconds) long enough for the addressee to get synchronized and to get ready for the handshake. After the handshaking, a point to point two way link would be established before the information exchange. During the information exchange, all other members in the radio-net would use the first party which started transmission as the timing reference and get synchronized with that.

### 5) Synchronization based on the first transmission and subsequently using master handover mechanism.

Here the synchronization starts with the first information transmission. i.e., when there is no RF transmission, and if a party-1 decides to transmit information, the party occupies one/more TDM slots (depending on the information type) and transmits its information. Party-1 sets itself as 'master' (timing master) and all other members in the net are slaves. All the slave units take the master's transmission as a timing reference. The master will periodically transmit the synchronization information (in the A-field), together with user information (e.g., audio, video or both).

Later, when a second party (party-2) decides to join in the information exchange, then party-2 will occupy one or more of the unused TDM time-slots to transmit its information. Now, party-1 can receive party-2's information and vice-versa. Party-1 is 'master'. All 'slaves' which also transmit information (Party-2 in this case) are called 'active-slaves'. All other members in the radio-net who receive all information transmission (of both party-1 and party-2 in this case) but have no information transmission from them, are called 'passive slaves'

During the communication, when the 'master' decides to end its transmission, it transmits its intention for a specified period of time (e.g., for 10 TDM time-frames) together with a release count-down number. Based on the priority level, one of the 'active slaves' when receiving this indication from the master, changes itself (takes over) as 'master' and continues its service after the original 'master' stops its transmission. All the 'passive slaves' will now switch their time reference to the new 'master'. This process is called master handover. There may be more than one 'active slave' available at the time of handover. The one with highest priority will takeover as the new master. The priority levels are either set in advance before deployment or based on some other mechanism (e.g., the active slave which is next in the chronological order in terms of the position of TDM time-slots, with reference to the releasing 'master').

If the GPS time-base is used in this synchronization method this will also allow inter radio-net communication if any two radio-nets have synchronization with the GPS time-base.

### 6) Synchronization based on the combination of GPS - time base and the first information transmission channel.

In similar manner to (3) above, a single unit can have a GPS receiver 130 which takes the GPS time-base as its timing reference. When this unit intends to transmit information to other users as a first party, then it will act as a timing 'master' the timing of which is synchronized with GPS signal. All other members in the radio-net will get synchronized with this first transmission which in turn is in sync with GPS time-base. This GPS synchronization will allow inter radio-net communication between two radio-nets.

There are two options (A & B) when the GPS signal is lost:

A. Party 1 (which has a GPS receiver 130 built-in), transmits its first information transfer. The party-1's TDM timeframe will be in sync with the GPS time base. All other members in the radio-net then get synchronized with party-1's first information transfer.

Party-2 joins in the information communication by occupying another time-slot different from that of the Party-1's. All but party-1 take party-1's transmission as time reference which is in turn synchronized with GPS.

During this time, if party-1 loses its GPS signal for any reason, it will continue to function as per normal, but the drift correction with reference to GPS could not be done. To manage this kind of situation well, when the GPS signal is available, party-1's micro-controller-160 and the BMC 110 learn the internal crystal oscillator (internal time-base) drift characteristics with reference to the GPS time-base. The studied information is memorized by the micro-controller. When the GPS time-base is lost due to some reason, the micro-controller will continue to correct the local time-base using the learnt information as though the GPS time-base is available. This kind of pseudo drift correction will keep the synchronization with reference to the GPS time-base even when it is absent for a sufficiently long period of time. If the GPS signal re-appears before the actual drift from GPS time-base does not go beyond an acceptable limit, then the whole radio-net will continue to have GPS synchronization, but if the GPS signal is absent for too long, then the actual drift may be too long, then the radio-net will not be in sync with GPS, but all the members are synchronized within the radio-net for intra-net communication.

B. Synchronized information is continuously (at regular time intervals) supplied in the A-field of the data packet.

When the GPS signal is lost, the apparatus will work in accordance with Option (4) above. In this case, communication within the radio-net will not be affected. Only inter radio-net communication between two radio-nets would not be possible if they are not in synchronization in the absent of GPS time-base to either one or both.

When a user intends to transmit, the communication device is actuated at the user interface by pressing a suitable button on the key pad 260 of the user interface or by a voice command. An address (or group of designated addresses) to receive the signal may also be specified at this time. Alternatively, this may be pre-set in advance. The micro-controller 160 then instructs transceiver 100 to scan the allocated frequency to see if there is any free bandwidth. If there is, the transceiver 100 starts transmitting in a specific time-slot immediately to thereby "seize" the time slot. Once a link has been established, the information is transmitted from the appropriate source (video camera 220, DTE or microphone 210) via the appropriate processing blocks, to the burst mode controller 110 which buffers the signal and sends this in packets in the designated time slot to the RF transceiver 100 to the designated address or group of addresses for transmission.

The other communication devices in the radio-net scan the frequency periodically looking for new transmissions in the air under the control of micro-controller 160. On detecting a transmission, the address placed on the transmission by the burst mode controller 110 of the transmitting device is checked and if any of the receiving communication devices find itself as one of the intended addressee then the new information is received and digitally processed by the burst mode controller 110 and, in the case of audio, by digital signal processor 120 and CODEC 190 to be output through speaker 200 or in the case of video through DSP 120, digital to analog converter 180 and VDU 170 to be displayed. If the signal is a data signal, this is transferred directly from the burst mode controller to the RS232/USB interface 140 for external transfer to the DTE.

If another communication device wishes to join in the communication, for example to have a two way discussion with the initiator, by a command to the user interface, either by a button being pressed on the key pad 260 of the user interface or by voice command, the micro-controller 160 instructs the RF receiver to find free bandwidth (i.e. unused time slots within the allocated frequency band) and seize them. These time slots will be different to those of the transmitter.

If an initial transmitter decides to stop its transmission due to user intervention or due to some other reason, it informs all others, its intention to stop transmission by sending a message conveying its intention and when it will stop the transmission. This information will be transmitted together with the user information (in A-field and B-field respectively). After the transmission is ended, this time-slot can be used by any other party who may wish to transmit information. Another method of finding free (unused) time-slots is by doing an RSSI (receiver signal strength indicator) scan and finding the free slots based on the RSSI values.

A party during a session of information transfer will not change its time-slot until the end of the information transfer. It may choose a different time-slot during the next session of information transfer.

Increase number of users wishing to have a multi-party conference can do so by simply seizing available time slots.

Point-to-point information communication is also possible by selecting the addressee individually. This could either by connection oriented eg. for a file transfer or connectionless oriented (datagram) for example as a voice call.

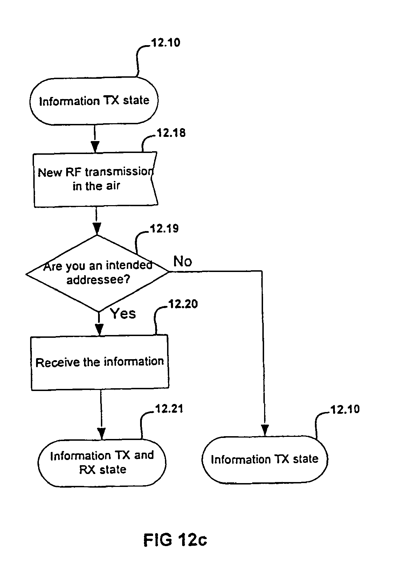

Figures 12(a) - (c) are flowcharts showing the receive and transmit operations of the communication devices, using the synchronization method (6) above as an example. The steps performed can easily be adapted for use with the other synchronization method discussed above as would be apparent to one skilled in the art.

With reference to Fig. 12a, this illustrates an initialization and transmission process.

At block 12.01, the communication device is in unsynchronized state, where it neither transmits nor receives information. In this state the said device may be synchronized with the GPS timing reference if it has a GPS receiver but it may not be in synchronization with other said devices in the radio net. At step 12.02 the micro-controller 160 checks to determiner if the communication device has a GPS receiver 130. If so, the controller determines at step 12.03 if the device is receiving the GPS time-base signal and if so, the TDM frame boundary of the burst mode controller 110 is synchronized with the GPS time base at step 12.04. At step 12.05, the airwaves are scanned periodically to determine if there is any RF transmission in the air. The apparatus then returns to the no information transmit or receive unsynchronized state (step 12.01). If the user of the device wishes to transmit, the user activates the communication device for information transfer, by pressing an appropriate button on the key pad 260, for example, and the controller 160 then checks for unused time slots in the TDMA time frame at step 12.07. If there are no time slots available, the device returns to the no information transmit or receive unsynchronized state of step 12.01. If time slot(s) are available, the information is then transmitted in the unoccupied time slot(s) at step 12.09, the device then assuming an information transmit state at step 12.10 until the transmission has finished.

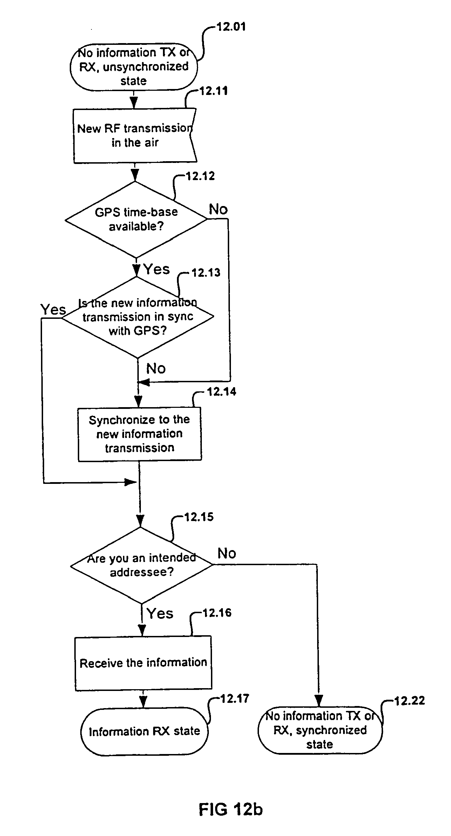

Fig. 12b shows steps taken by a communication device receiving an incoming signal. From the no information transmit or receive unsynchronized state of step 12.01, the controller, through the periodic scanning step 12.05, will determine a new RF transmission in the air at step 12.11. A test is then made if the GPS time base is available at step 12.12. This step is only performed if the GPS receiver is included as established at step 12.02. If the GPS signal is available, the controller determines if the incoming RF transmission is in synchronization with the GPS signal at step 12.13. If either the GPS time base is unavailable or if the information is not in synchronization with the GPS, the controller then determines synchronization from the information transmission itself at step 12.14. The signal is then passed to determine if the communication device is an intended addressee at step 12.15 and if so, a message is received and processed at step 12.16, the device entering an information received stage at step 12.17 until the received transmission has finished. If the device is not an intended addressee, the device will then enter into a new state, "no information transmit or receive, synchronized state", 12.22.

Fig. 12c shows the steps taken if a transmitting device (i.e. in the information transmit state of step 12.10), detects a transmission to be received. This is detected by the scanning step 12.05 and once a detection is made at step 12.18, no synchronization is performed since it is assumed that the incoming transmission is in synchronization with the previously transmitted signal from that communication device. If it is determined that the communication device is an intended addressee at step 12.19, the information is received at step 12.20 and the communication device senses an information transmit and receive state at step 12.21. If the device is not an intended addressee, the device remains in the information transmit state of step 12.10.

When the device is in 'information transmit and receive state' 12.21, it may also receive another information from other devices using steps 12.18, 12.19, 12.20 and 12.21. Hence, in state 12.21, there may be multiple information received from multiple parties.

When the device is in 'no information transmit or receive, synchronized state' 12.22 (shown in Fig. 12b), the device can follow steps 12.06, 12.07, 12.08 and 12.09 to reach state 12.10. The device can also reach state 12.17 following steps 12.11, 12.15 and 12.16 skipping 12.12, 12.13 and 12.14.

The various states indicating information transmission, or reception set flags in the controller to determine how future incoming or transmitted signals are processed.

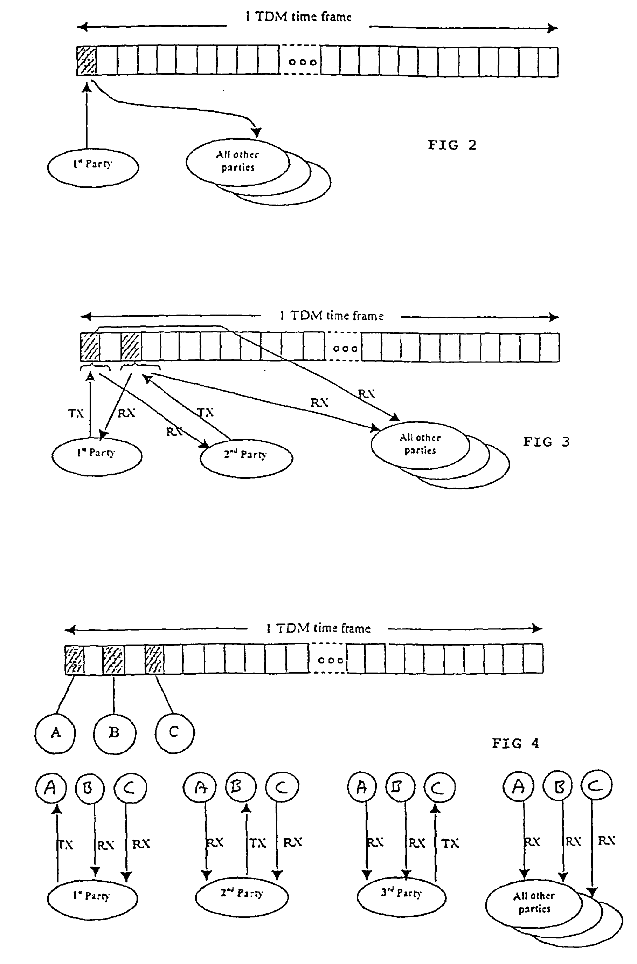

Some examples of various kinds of data transfer are shown in Figs. 2 - 9.

Fig. 2 illustrates a one party audio broadcast with unlimited listeners. In this case, the first party seizes the shaded slot and transmits audio data to the other devices in the radio-net synchronizing with the TDM time frame by any of the means noted above and then receiving the audio data.

In Fig. 3, two parties are having an audio conference with unlimited listeners. Initially, the first party seizes a time slot and transmits audio, together with synchronization information (in the case of synchronization techniques 2-6 noted above), the second party subsequently seizes another time slot and transmit its audio. The first party receives the second party audio and the second party receives the first party audio. All the other parties receive audio from the first and second parties together (provided the first and second parties transmit their audio data with a "global" address.

Fig. 4 illustrates three parties audio conferencing with unlimited listeners. In this case, the first, second and third parties reserve three different time slots for transmission and receive the transmission from the other two. All other parties receive the transmission from the first, second and third parties if the transmission are globally addressed.

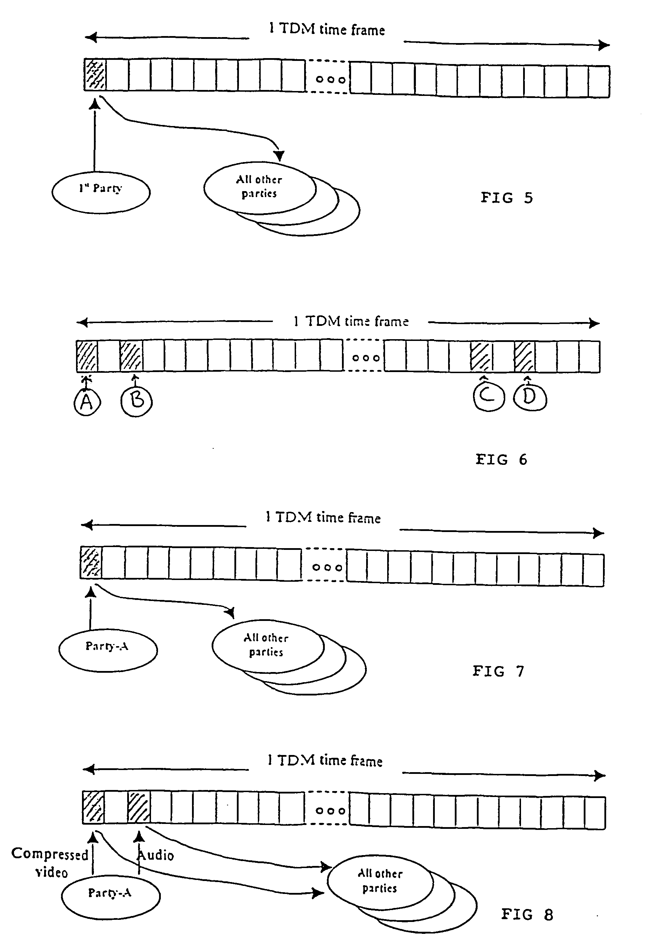

Fig. 5 illustrates a one party data broadcast with unlimited recipients. In this case, the first party seizes the shaded time slot and broadcast data (e.g. text information and also synchronization information if appropriate). The other parties synchronize with the first party to receive the data transmission.

Fig. 6 illustrates multiple point-to-point data communication. In this case, party A seizes the indicated slot and sends an address packet to party B to initiate a handshake and then communicates in a connection oriented manner with party B. Party B in response to the request from party A answers the data request by reserving a second slot, sending an address packet to initiate handshake to connect with party A, for bi-directional communication. Similarly, party C and D can separately communicate with each other using different time slots.

Fig. 7 illustrates a video broadcast with unlimited listeners in which party A reserves the indicated slot and transmit moving video or still pictures/video clips with periodic refresh. Party A will also, if necessary, transmit synchronization information. The other parties synchronize with party A to receive the video signal.

Fig.8 illustrates a multi-media broadcast with unlimited listeners. Party A seizes multiple time slots and then transmits audio and compressed video in respective slots. Party A also provide synchronization information if needed. All the other parties synchronize with party A to receive the audio and compressed video information which is decoded by burst mode controller 110 and sent to VDU 170 and speaker 200 as appropriate.

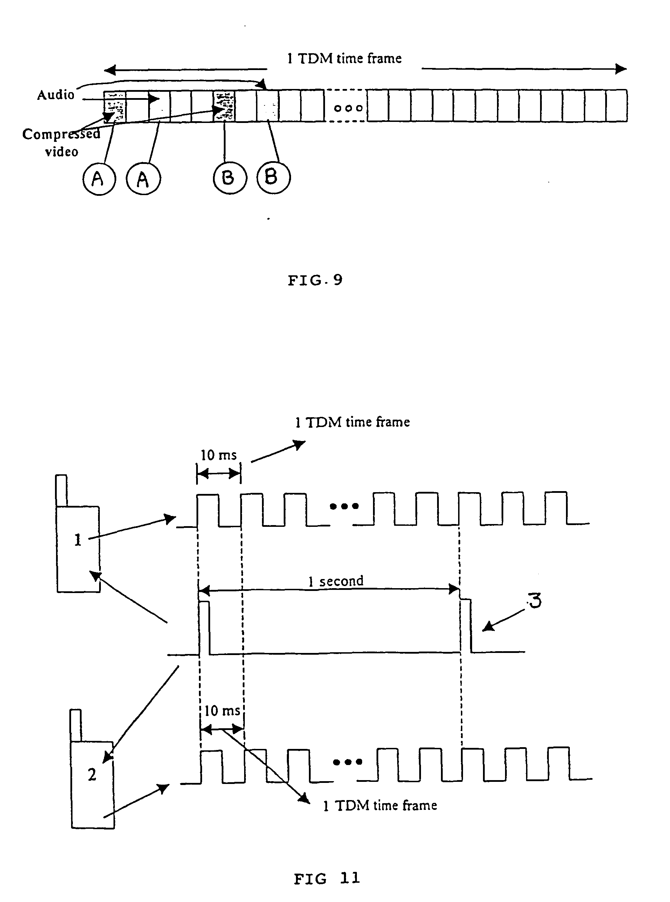

Fig. 9 illustrates the two-part multi-media broadcast with unlimited listeners with party A transmitting compressed video and audio on the channels indicated and party B transmitting compressed video and audio on the channels indicated. Party A can then receive the transmission of party B, party B can receive the transmission of party A and all other parties can receive both transmissions.

For multiple audio transmissions, the multiple received audio signals are mixed locally by the DSP 120 of the receiving communication devices. For multiple video transmissions, the signals are separately processed by DSP 120 for side-by-side display on VDU 170.

The embodiment described is not to be construed as limitative. For example, although one slot is reserved in the described embodiment per transmitting user for transmission of one type of information, the bandwidth can effectively be increased by reserving more than one slot and transmitting information in parallel. Furthermore, although all the communication devices for example shown in Fig. 1 have been indicated as being the same, if it is known that some members of the radio-net will only wish to receive information and not transmit information, some of the communication devices can have a receiving function only.

## Claims

1. Communication apparatus comprising a plurality of mobile communication devices (1,2) arranged for peer-to-peer communication using TDMA, the arrangement being such that a said device (1,2) wishing to transmit uses a time slot in each TDMA time-frame used for transmission, the time slot in each TDMA time-frame being the same, the communication devices (1,2) including means for synchronization (100,110,130) to the same TDMA time frame using a synchronization signal, **characterised in that**
the synchronization signal is being transmitted by a said communication device (1,2).

2. Apparatus as claimed in claim 1 wherein if more than one said device (1,2) wishes to transmit, the devices (1,2) use different time slots.

3. Apparatus as claimed in claim 1 or claim 2 wherein a said device (1,2) wishing to transmit uses more than one time slot in each TDMA time-frame used for transmission, the used time slots in each frame being the same.

4. Apparatus as claimed in any one of the preceding claims wherein the synchronization means (100,110,130) comprises a GPS receiver (130) provided in each device (1,2), the TDMA time-frame being synchronized to a GPS reference time base (3).

5. Apparatus as claimed in any one of claims 1 to 3 wherein one said communication device (1,2) broadcasts a beacon transmission without user information, the beacon transmission being used for synchronization.

6. Apparatus as claimed in any one of claims 1 to 3 wherein the beacon transmitting device (1,2) includes a GPS receiver (130), the beacon being synchronized to a GPS reference time base (3).

7. Apparatus as claimed in any one of claims 1 to 3 wherein synchronization information is provided with a transmitted message including user information, the message being sent from a said communication device (1,2), the other communication devices (1,2) obtaining the synchronization information from the message.

8. Apparatus as claimed in claim 7, wherein the transmitted message is sent from a said communication device (1,2) when the other communication devices (1,2) are scanning for a said message.

9. Apparatus as claimed in claim 7 or claim 8 wherein the transmitting communication device (1,2) includes a GPS receiver (130) and the synchronization information is synchronized with a GPS reference time base (3).

10. Apparatus as claimed in claim 9 wherein, when the communication device (1,2) transmitting the transmitted message ends its transmission, synchronization information is provided with a transmitted message sent from another said communication device (1,2).

11. Apparatus as claimed in any one of the preceding claims wherein a said communication device (1,2) comprises a receiver (100), a TDMA burst mode controller (110) arranged to decode received TDMA signals and signal
processing means (120) arranged to provide an output.

12. Apparatus as claimed in claim 11 wherein the communication device further comprises a transmitter (100), the burst mode controller (110) further being arranged to encode an input signal for output in the reserved TDMA time slot for transmission by the transmitter (100).

13. Communication apparatus as claimed in any one of the preceding claims wherein each communication device (1,2) includes means for local processing of multiple received signals from other communication devices (1,2).

14. Apparatus as claimed in claim 13 wherein said processing means (120) comprises means for local mixing received audio signals.

15. Apparatus as claimed in claim 13 or claim 14 wherein said processing means (120) includes means for separate processing and display received video signal.

16. Apparatus as claimed in claim 11 or claim 12 wherein transmitted or received signals are selected from audio, video or data signals or a combination thereof.

17. A communication apparatus (1,2) as claimed in claim 11 or claim 12 further comprising means for synchronizing the burst mode controller (110) to the TDMA time frame.

18. Apparatus as claimed in claim 5, wherein the beacon transmission is sent from the said communication device (1,2) when the other communication devices (1,2) are scanning for a said beacon transmission.

19. A mobile communication device (1,2) comprising a transmitter (100), a TDMA burst mode controller (110) and signal processing means (120), where an input signal to be transmitted by the communication device (1,2) is digitally processed by the signal processing means (120) and the burst mode controller (110) encodes the processed signal for transmission by the transmitter (100) in a TDMA time slot in each TDMA time frame used for transmission, the time slot in each TDMA time-frame being the same, and means for synchronization (100,110,130) of the communication device (1,2) to the same TDMA time frame as other mobile communication devices (1,2) in the same net, using a synchronization signal
**characterised in that**
the synchronization signal is transmitted by the said communication device (1,2).

20. A device according to claim 19, further comprising a receiver (100), and in which the TDMA burst mode controller (110) decodes TDMA signals received by the receiver (100) in a time slot in each TDMA time frame used for transmission of the received signal.

## Patentansprüche

1. Kommunikationsvorrichtung, mehrere mobile Kommunikationsgeräte (1, 2) umfassend, die für die Peer-to-Peer-Kommunikation unter Verwendung von Zeitmultiplex (TDMA) eingerichtet sind, wobei die Einrichtung derart ist, dass eines der Geräte (1,2), das senden möchte, ein Zeitfenster in jedem TDMA-Zeitrahmen verwendet, der zum Senden verwendet wird, wobei das Zeitfenster in jedem TDMA-Zeitrahmen dasselbe ist, wobei die Kommunikationsgeräte (1, 2) Mittel zum Synchronisieren (100, 110, 130) mit demselben TDMA-Zeitrahmen unter Verwendung eines Synchronisierungssignals umfassen,
**dadurch gekennzeichnet, dass**
das Synchronisierungssignal durch eines der Kommunikationsgeräte (1, 2) gesendet wird.

2. Vorrichtung nach Anspruch 1, wobei die Geräte (1, 2) unterschiedliche Zeitfenster verwenden, wenn mehr als eines der Geräte (1, 2) senden möchte.

3. Vorrichtung nach Anspruch 1 oder Anspruch 2, wobei eines der Geräte (1, 2), das senden möchte, mehr als ein Zeitfenster in jedem TDMA-Zeitrahmen verwendet, der zum Senden verwendet wird, wobei die verwendeten Zeitfenster in jedem Rahmen dieselben sind.

4. Vorrichtung nach einem der vorhergehenden Ansprüche, wobei das Synchronisierungsmittel (100, 110, 130) einen GPS-Empfänger (130) umfasst, der in jedem Gerät (1, 2) bereitgestellt ist, wobei der TDMA-Zeitrahmen mit einer GPS-Referenzzeitbasis (3) synchronisiert ist.

5. Vorrichtung nach einem der Ansprüche 1 bis 3, wobei eines der Kommunikationsgeräte (1, 2) eine Ortungssignal-Übertragung ohne Informationen des Nutzers sendet, wobei die Ortungssignal-Übertragung zum Synchronisieren verwendet wird.

6. Vorrichtung nach einem der Ansprüche 1 bis 3, wobei das Funkbaken-Sendegerät (1, 2) einen GPS-Empfänger (130) umfasst, wobei die Bake mit einer GPS-Referenzzeitbasis (3) synchronisiert ist.

7. Vorrichtung nach einem der Ansprüche 1 bis 3, wobei Synchronisierungsinformationen mit einer gesendeten Mitteilung, die Nutzerinformationen enthält, bereitgestellt werden, wobei die Mitteilung von einem der Kommunikationsgeräte (1, 2) gesendet wird, wobei die anderen Kommunikationsgeräte (1, 2) die Synchronisierungsinformationen aus der Mitteilung erhalten.

8. Vorrichtung nach Anspruch 7, wobei die gesendete Mitteilung von einem der Kommunikationsgeräte (1, 2) gesendet wird, wenn die anderen Kommunikationsgeräte (1, 2) nach einer der Mitteilungen suchen.

9. Vorrichtung nach Anspruch 7 oder Anspruch 8, wobei das sendende Kommunikationsgerät (1, 2) einen GPS-Empfänger (130) umfasst und die Synchronisierungsinformationen mit einer GPS-Referenzzeitbasis (3) synchronisiert sind.

10. Vorrichtung nach Anspruch 9, wobei die Synchronisierungsinformationen mit einer gesendeten Mitteilung, die von einem weiteren Kommunikationsgerät (1, 2) gesendet wird, bereitgestellt werden, wenn das Kommunikationsgerät (1, 2), das die gesendete Mitteilung sendet, seine Sendung beendet.

11. Vorrichtung nach einem der vorherigen Ansprüche, wobei eines der Kommunikationsgeräte (1, 2) einen Empfänger (100), einen TDMA-Burst-Mode-Controller (110), der zum Decodieren der empfangenen TDMA-Signale ausgelegt ist, und ein Signalverarbeitungsmittel (120), das zur Bereitstellung einer Ausgabe ausgelegt ist, umfasst.

12. Vorrichtung nach Anspruch 11, wobei das Kommunikationsgerät weiterhin einen Sender (100) umfasst, wobei der Burst-Mode-Controller (110) weiterhin so ausgelegt ist, dass er ein Eingangssignal für die Ausgabe im reservierten TDMA-Zeitfenster zum Senden durch den Sender (100) codiert.

13. Kommunikationsvorrichtung nach einem der vorhergehenden Ansprüche, wobei jedes Kommunikationsgerät (1, 2) Mittel zur lokalen Verarbeitung mehrerer empfangener Signale von anderen Kommunikationsgeräten (1, 2) umfasst.

14. Vorrichtung nach Anspruch 13, wobei das Verarbeitungsmittel (120) ein Mittel zum lokalen Mischen empfangener Audiosignale umfasst.

15. Vorrichtung nach Anspruch 13 oder Anspruch 14, wobei das Verarbeitungsmittel (120) ein Mittel zur separaten Verarbeitung und Anzeige empfangener Videosignale umfasst.

16. Vorrichtung nach Anspruch 11 oder Anspruch 12, wobei gesendete oder empfangene Signale aus Audio-, Video- oder Datensignalen oder einer Kombination derselben ausgewählt werden.

17. Kommunikationsvorrichtung (1, 2) nach Anspruch 11 oder Anspruch 12, die weiterhin Mittel zum Synchronisieren des Burst-Mode-Controllers (110) mit dem TDMA-Zeitrahmen umfasst.

18. Vorrichtung nach Anspruch 5, wobei die Ortungssignal-Übertragung vom Kommunikationsgerät (1, 2) gesendet wird, wenn die anderen Kommunikationsgeräte (1, 2) nach einer der Ortungssignal-Übertragungen suchen.

19. Mobiles Kommunikationsgerät (1, 2), das einen Sender (100), einen TDMA-Burst-Mode-Controller (110) und ein Signalverarbeitungsmittel (120) umfasst, wobei ein Eingangssignal, das durch das Kommunikationsgerät (1, 2) gesendet werden soll, durch das Signalverarbeitungsmittel (120) digital verarbeitet wird und der Burst-Mode-Controller (110) das verarbeitete Signal für die Sendung durch den Sender (100) in einem TDMA-Zeitfenster in jedem TDMA-Zeitrahmen, der zur Sendung verwendet wird, codiert, wobei das Zeitfenster in jedem TDMA-Zeitrahmen dasselbe ist, und das weiterhin Mittel zum Synchronisieren (100, 110, 130) des Kommunikationsgeräts (1, 2) mit demselben TDMA-Zeitrahmen wie andere mobile Kommunikationsgeräte (1, 2) im selben Netz umfasst, wobei ein Synchronisierungssignal verwendet wird,
**dadurch gekennzeichnet, dass**
das Synchronisierungssignal durch das Kommunikationsgerät (1, 2) gesendet wird.

20. Gerät nach Anspruch 19, das weiterhin einen Empfänger (100) umfasst und in dem der TDMA-Burst-Mode-Controller (110) TDMA-Signale decodiert, die vom Empfänger (100) in einem Zeitfenster in jedem TDMA-Zeitrahmen, der zum Senden des empfangenen Signals verwendet wird, empfangen werden.

## Revendications

1. Appareil de communication comprenant une pluralité de dispositifs (1, 2) de communication mobiles agencés pour une communication de poste à poste en utilisant une AMRT, l'agencement étant tel qu'un dit dispositif (1, 2) souhaitant transmettre utilise un intervalle de temps dans chaque trame de temps AMRT utilisée pour une transmission, l'intervalle de temps dans chaque trame de temps AMRT étant le même, les dispositifs (1, 2) de communication comportant un moyen de synchronisation (100, 110, 130) à la même trame de temps AMRT utilisant un signal de synchronisation, **caractérisé en ce que**
le signal de synchronisation est transmis par un dit dispositif (1, 2) de communication.

2. Appareil selon la revendication 1, dans lequel, si plus d'un parmi lesdits dispositifs (1,2) souhaite transmettre, les dispositifs (1,2) utilisent des intervalles de temps différents.

3. Appareil selon la revendication 1 ou la revendication 2, dans lequel un dit dispositif (1, 2) souhaitant transmettre utilise plus d'un intervalle de temps dans chaque trame de temps AMRT utilisée pour une transmission, les intervalles de temps utilisés dans chaque trame étant les mêmes.

4. Appareil selon l'une quelconque des revendications précédentes, dans lequel le moyen (100, 110, 130) de synchronisation comprend un récepteur GPS (130) prévu dans chaque dispositif (1, 2), la trame des temps AMRT étant synchronisée par rapport à une base (3) de temps de référence GPS.

5. Appareil selon l'une quelconque des revendications 1 à 3, dans lequel ledit dispositif (1, 2) de communication diffuse une transmission balise sans information d'utilisateur, la transmission balise étant utilisée pour une synchronisation.

6. Appareil selon l'une quelconque des revendications 1 à 3, dans lequel le dispositif (1, 2) de transmission balise comporte un récepteur GPS (130), la balise étant synchronisée par rapport à une base (3) de temps de référence GPS.

7. Appareil selon l'une quelconque des revendications 1 à 3, dans lequel les informations de synchronisation sont fournies avec un message transmis comportant des informations d'utilisateur, le message étant envoyé depuis un dit dispositif (1, 2) de communication, l'autre dispositif (1, 2) de communication obtenant les informations de synchronisation à partir du message.

8. Appareil selon la revendication 7, dans lequel le message transmis est envoyé depuis un dit dispositif (1, 2) de communication lorsque l'autre dispositif (1, 2) de communication effectue un balayage pour un dit message.

9. Appareil selon la revendication 7 ou la revendication 8, dans lequel le dispositif (1, 2) de communication de transmission comporte un récepteur GPS (130) et les informations de synchronisation sont synchronisées par rapport à une base (3) de temps de référence GPS.

10. Appareil selon la revendication 9, dans lequel, lorsque le dispositif (1, 2) de communication transmettant le message transmis achève sa transmission, des informations de synchronisation sont fournies avec un message transmis envoyé depuis un autre dit dispositif (1, 2) de communication.

11. Appareil selon l'une quelconque des revendications précédentes, dans lequel un dit dispositif (1, 2) de communication comprend un récepteur (100), un dispositif de commande (110) en mode impulsions AMRT agencé afin de décoder des signaux AMRT reçus et un moyen de traitement (120) de signaux agencé afin de fournir une sortie.

12. Appareil selon la revendication 1 1, dans lequel le dispositif de communication comprend en outre un transmetteur (100), le dispositif de commande (110) en mode impulsions étant en outre agencé afin de coder un signal d'entrée pour une sortie dans l'intervalle de temps AMRT réservé pour une transmission par le transmetteur (100).

13. Appareil de communication selon l'une quelconque des revendications précédentes, dans lequel chaque dispositif (1, 2) de communication comporte un moyen destiné à un traitement local de signaux multiples reçus depuis d'autres dispositifs (1, 2) de communication.

14. Appareil selon la revendication 13, dans lequel ledit moyen (120) de traitement comprend un moyen destiné à un mélange local de signaux audio reçus.

15. Appareil selon la revendication 13 ou la revendication 14, dans lequel ledit moyen (120) de traitement comporte un moyen de traitement et d'affichage séparé d'un signal vidéo reçu.

16. Appareil selon la revendication 11 ou la revendication 12, dans lequel les signaux transmis ou reçus sont choisis parmi des signaux audio, vidéo ou de données ou une combinaison de ces derniers.

17. Appareil (1, 2) de communication selon la revendication 11 ou la revendication 1 2, comprenant en outre un moyen destiné à synchroniser le dispositif de commande (110) en mode impulsions sur la trame de temps AMRT.

18. Appareil selon la revendication 5, dans lequel la transmission balise est envoyée depuis ledit dispositif (1, 2) de communication lorsque l'autre dispositif (1, 2) de communication effectue un balayage pour ladite transmission balise.

19. Dispositif (1, 2) de communication mobile comprenant un transmetteur (100), un dispositif de commande (110) en mode impulsions AMRT et un moyen (120) de traitement de signaux, où un signal d'entrée devant être transmis par le dispositif (1, 2) de communication est traité numériquement par le moyen (120) de traitement de signaux et le dispositif de commande (110) en mode impulsions code le signal traité pour une transmission par le transmetteur (100) dans un intervalle de temps AMRT dans chaque trame de temps AMRT utilisée pour une transmission, l'intervalle de temps dans chaque trame de temps AMRT étant le même, et un moyen destiné à une synchronisation (100, 110, 130) du dispositif (1, 2) de communication sur la même trame de temps AMRT que d'autres dispositifs (1, 2) de communication mobile sur le même réseau, en utilisant un signal de synchronisation
**caractérisé en ce que**
le signal de synchronisation est transmis par ledit dispositif (1, 2) de communication.

20. Dispositif selon la revendication 19, comprenant en outre un récepteur (100) et dans lequel le dispositif de commande (110) en mode impulsions AMRT décode des signaux AMRT reçus par le récepteur (100) dans un intervalle de temps dans chaque trame de temps AMRT utilisée pour une transmission du signal reçu.
